# EUROPÄISCHE PATENTSCHRIFT

(11) **EP 2 126 444 B1**
(45) Veröffentlichungstag und Bekanntmachung des Hinweises auf die Patenterteilung: **02.01.2013**
(21) Anmeldenummer: 08701459.3
(22) Anmeldetag: 14.01.2008
(51) Int. Cl.: F16L 27/10, F04D 29/66, F04D 29/60, F16F 7/00, F16F 15/02

(54) **VAKUUMLEITUNG**
VACUUM LINE
CONDUITE À VIDE

(30) Priorität: 23.02.2007 DE 102007008859
(43) Veröffentlichungstag der Anmeldung: 02.12.2009
(73) Patentinhaber: Oerlikon Leybold Vacuum GmbH, 50968 Köln (DE)
(72) Erfinder: ENGLÄNDER, Heinrich, 52441 Linnich (DE)
(74) Vertreter: von Kreisler Selting Werner
(86) Internationale Anmeldenummer: PCT/EP2008/050336
(87) Internationale Veröffentlichungsnummer: WO 2008/101747

(56) Entgegenhaltungen:
- DE-A1- 10 001 509

## Beschreibung

Die Erfindung bezieht sich auf eine Vakuumleitung mit zwei durch einen Schwingungsdämpfer verbundenen Leitungsteilen.

Schwingungsdämpfer werden in der Vakuumtechnik zur Entkopplung von Schwingungen in einer Vakuumverbindung eingesetzt, insbesondere dann, wenn auf diese Weise die Übertragung von durch eine Vakuumpumpe erzeugte Schwingungen auf einen angeschlossenen schwingungsempfindlichen Rezipienten, beispielsweise ein Elektronenmikroskop, vermieden werden soll bzw. muss.

Aus DE 100 01 509 A1 ist eine Turbomolekular-Vakuumpumpe bekannt, die einen Hochvakuumflansch aufweist, der mit Hilfe eines Schwingungsdämpfers von dem Pumpenteil entkoppelt ist. Der Schwingungsdämpfer besteht aus einem Metall-Wellbalg mit einem separaten, außenseitigen, stützenden Gummimantel. Der Gummimantel stützt den Hochvakuumflansch gegen den Pumpenteil axial ab und ist daher relativ steif. Die Schwingungsübertragung wird daher nur relativ begrenzt gedämpft, was insbesondere ein an den Hochvakuumflansch angeschlossenes empfindliches Gerät, beispielsweise ein Elektronenmikroskop, in seiner Funktion erheblich beeinträchtigen kann.

Aufgabe der Erfindung ist es demgegenüber, eine Vakuumleitung mit einem Schwingungsdämpfer mit verbesserten Dämpfungseigenschaften zu schaffen.

Diese Aufgabe wird erfindungsgemäß gelöst mit einer Vakuumleitung bzw. einer Vakuumpumpe mit den Merkmalen des Patentanspruches 1 bzw. 8.

Bei der erfindungsgemäßen Vakuumleitung werden durch den Schwingungsdämpfer zwei zueinander in Grenzen bewegliche Leitungsteile vakuumdicht und unstarr miteinander verbunden. Den beiden auf diese Weise verbundenen Leitungsteilen ist jeweils ein Rohr zugeordnet, nämlich dem einen Leitungsteil ein vertikales Außenrohr und dem anderen Leitungsteil ein vertikales Innenrohr. Das Innenrohr ist mit einem Radialabstand beabstandet in das Außenrohr eingesteckt. Das Außenrohr und das Innenrohr überlappen sich auf diese Weise axial über eine Überlappungslänge. Zwischen den beiden miteinander korrespondierenden Rohr-Öffnungsrändern ist eine flexible Zugmanschette aufgespannt, die mit ihren Öffnungsrändern bevorzugt an den Öffnungsrändern der beiden Rohrenden befestigt ist und auf diese Weise eine vakuumdichte Zug-Verbindung zwischen den beiden Rohren herstellt. Zugmanschette bedeutet vorliegend, dass die Manschette auf Zug beansprucht wird, wenn die beiden Rohre z.B. durch Druckunterschiede außer- und innerhalb der Vakuumleitung axial ineinander gedrückt werden. Die beiden Rohre und die Zugmanschette zeigen im Längsschnitt einen N-förmigen Verlauf, wobei die Diagonale von der Zugmanschette gebildet wird.

Durch das Zusammenstecken des Innenrohres und des Außenrohres wird eine sehr kompakte Bauweise des Schwingungsdämpfers realisiert. Da die Zugmanschette die durch den Druckunterschied generierten axialen Kräfte aufnimmt und die axiale Annäherung bzw. Überlappung der beiden Rohre auf diese Weise auf einen Maximalwert begrenzt, sind keine weiteren Mittel mehr erforderlich, um einen unmittelbaren axialen Kontakt der beiden Leitungsteile miteinander zu vermeiden. Zwar wird die Zugmanschette bei einem Druckgefälle zwischen der Außenseite und der Innenseite der Vakuumleitung je nach MaterialElastizität verlängert, jedoch wird die Zugmanschette durch den Druckunterschied gleichzeitig jedenfalls geringfügig zur Unterdruckseite hin ausgebeult, so dass sich die effektive axiale Länge bzw. Projektion der Zugmanschette wieder verringert.

Bei einer nahezu als axialer Schlauch ausgebildeten Zugmanschette werden Querschwingungen sehr stark gedämpft bzw. nicht übertragen, während Längsschwingungen nur durch die Elastizität der Zugmanschette gedämpft werden. Gleiches gilt annähernd umgekehrt, wenn die Manschettenlänge gering im Verhältnis zur Manschettenbreite ist.

Die Zugmanschette weist jedenfalls bei Unterdruck bzw. Vakuum in der Vakuumleitung eine axiale Vorzugsrichtung auf. Die Zugmanschette ist dabei vorzugsweise um weniger als 45° und besonders bevorzugt um weniger als 20° zur Axialen geneigt, d.h. die mittlere Konizität ist kleiner als 45° bzw. 20°. Der gewählte Konuswinkel von bis hinunter zu 0° gegenüber der Axialen hängt u.a. davon ab, in welcher Raumachse die zu entkoppelnden Schwingungen liegen bzw. gedämpft werden sollen.

Vorzugsweise ist die axiale Manschettenlänge mindestens doppelt so groß wie die radiale Manschettenbreite. Auf diese Weise können ggf. relativ große axiale Kräfte aufgrund des Druckunterschiedes zwischen der Außenseite und der Innenseite der Vakuumleitung durch die Zugmanschette aufgenommen werden. Durch eine relativ große Manschettenlänge bzw. einen relativ kleinen Kegelwinkel der Zugmanschette wird insbesondere die Übertragung radialer Schwingungen stark gedämpft bzw. vermieden. Dies ist insbesondere dann von großer Bedeutung, wenn eines der beiden Leitungsteile an eine schnell rotierende Maschine, beispielsweise an eine Turbopumpe, angeschlossen ist, die insbesondere radiale Schwingungen erzeugt.

Gemäß einer bevorzugten Ausgestaltung weist die Zugmanschette mindestens einen Hohlraum auf, der mit einem Fluid befüllbar ist. Als Fluid kann ein Gas oder eine Flüssigkeit verwendet werden. Der Hohlraum kann sich über einen Teil oder die gesamte Zugmanschetten-Länge und zirkulär über einen Teil oder den gesamten Umfang der Zugmanschette erstrecken. Es können auch mehrere voneinander getrennte Hohlräume vorgesehen sein.

Durch verschiedene Fluid-Befüllungen des Zugmanschetten-Hohlraumes können die Dämpfungseigenschaften der Zugmanschette verändert werden. Beispielsweise können die Dämpfungseigenschaften in Abhängigkeit von den jeweiligen Randbedingungen auf diese Weise dauerhaft eingestellt werden.

Es kann eine Manschettensteuerung vorgesehen sein, die die Fluidmenge in dem Hohlraum betriebszustandsabhängig steuert. Auf diese Weise können während des Betriebes der Vakuumleitung die Dämpfungseigenschaften der Zugmanschette verändert werden. Ergänzend hierzu kann mit der Manschettensteuerung auch die Länge der Zugmanschette gesteuert werden. Auf diese Weise kann beispielsweise beim Hochfahren einer schnelldrehenden Rotations-Vakuumpumpe eine steife Zugmanschette eingestellt werden. Alternativ kann während des Hochfahrens beispielsweise durch Entleeren des Hohlraumes vorübergehend eine ungedämpfte, direkte mechanische Koppelung der beiden Leitungsteile hergestellt werden. Dies ist beispielsweise bei der Schwingungsentkopplung eines Elektronenmikroskops von einer Turbomolekular-Vakuumpumpe sinnvoll, die für den Betrieb bei Nenndrehzahl der Turbomolekularpumpe, eine sehr niederfrequente Abstimmung des Schwingungsdämpfers erfordert. Eine sehr niederfrequente Abstimmung des Schwingungsdämpfers kann jedoch zu Instabilitäten und Resonanzerscheinungen beim Hochlaufen der Turbomolekularpumpe führen. Die Manschettensteuerung erlaubt also während des Hochlaufens eine harte ungedämpfte Koppelung der beiden Leitungsteile miteinander, und erlaubt nach dem Hochlaufen eine Inbetriebnahme des Schwingungsdämpfers durch Füllung des Zugmanschetten-Hohlraumes mit dem Fluid.

Der Zugmanschetten-Hohlraum kann ferner als Kissen in dem radialen Raum zwischen dem Innenrohr und dem Außenrohr wirken, das die radialen Relativbewegungen zwischen dem Innenrohr und dem Außenrohr dämpft bzw. ein unmittelbares Anschlagen des Innenrohrs an das Außenrohr verhindert.

Gemäß einer bevorzugten Ausgestaltung kann ein Druckanschlag und/oder ein Zuganschlag vorgesehen sein. Der Druckanschlag kann einerseits als beabsichtigte starre Verbindung der beiden Leitungsteile genutzt werden, beispielsweise beim Hochfahren einer Turbomolekularpumpe. Der Druckanschlag begrenzt ferner die axiale Annäherung der beiden Leitungsteile, beispielsweise für den Fall einer Beschädigung der Zugmanschette, bei einem starken Axialstoß etc.. Der Zuganschlag kann beispielsweise dazu dienen, bei Nichtbetrieb, also insbesondere bei Druckgleichheit innerhalb und außerhalb der Vakuumleitung, Gewichtskräfte u.ä. aufzunehmen.

Gemäß einem nebengeordneten Patentanspruch 8 ist eine Vakuumpumpe durch einen Schwingungsdämpfer mit einem Rezipienten verbunden, wobei der Schwingungsdämpfer die Merkmale der Patentansprüche 1 bis 7 aufweist.

Vorzugweise ist die Vakuumpumpe eine Turbomolekularpumpe und ist der Rezipient ein Elektronenmikroskop. Elektronenmikroskope sind extrem empfindlich in Bezug auf Schwingungen und Vibrationen, wie sie beim Betrieb einer Turbomolekularpumpe unvermeidlich sind. Der beschriebene Schwingungsdämpfer eignet sich in besonderer Weise zur Entkopplung der Turbomolekularpumpe von dem Elektronenmikroskop.

Im Folgenden werden unter Bezugnahme auf die Zeichnungen zwei Ausführungsbeispiele der Erfindung näher erläutert.

Es zeigen:
- Fig. 1: eine Vakuumleitung mit zwei durch einen Schwingungsdämpfer verbundenen Leitungsteilen im Längsschnitt,
- Fig. 2: eine an ein Elektronenmikroskop angeschlossene Turbomolekularpumpe mit einem Schwingungsdämpfer zur Verbindung der Turbomolekularpumpe mit dem Elektronenmikroskop, und
- Fig. 3: die Konstellation der Fig. 2 mit einer zweiten Ausführungsform eines Schwingungsdämpfers mit einem Hohlraum.

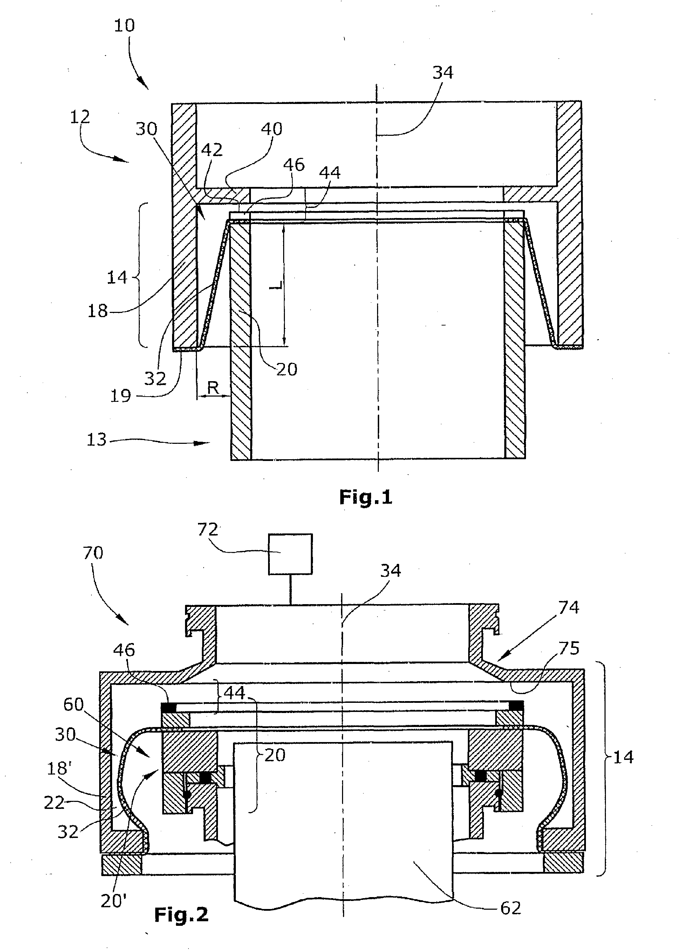

In Fig. 1 ist schematisch ein Teil einer Vakuumleitung 10 dargestellt, die von zwei Leitungsteilen 12,13 gebildet wird, die durch einen Schwingungsdämpfer 14 miteinander verbunden sind. Innerhalb der Vakuumleitung 10 herrscht im Betriebszustand ein unteratmosphärischer Druck, außerhalb der Vakuumleitung 10 herrscht atmosphärischer Druck.

Der obere Leitungsteil 12 weist ein vertikales Außenrohr 18 auf, in das ein vertikales Innenrohr 20 eingesteckt ist. Der Querschnitt des Außenrohres 18 und des Innenrohres 20 kann, muss jedoch nicht, kreisförmig sein. Das Querschnittsprofil des Außen- und des Innenrohres 18,20 kann, muss jedoch nicht, jeweils zylindrisch sein.

Der Öffnungsrand 42 des Innenrohres 20 und der Öffnungsrand 19 des Außenrohres 18 sind durch eine flexible Zugmanschette 30 miteinander verbunden, die von einem flexiblen, aber nicht oder nicht sehr elastischen Manschettenschlauch 32 gebildet wird. Die Öffnungsränder des Manschettenschlauches 32 sind vakuumdicht mit den jeweiligen Öffnungsrändern 19,42 des Außen- und Innenrohres 18,20 verbunden. Dies kann beispielsweise durch entsprechende, verschraubte Klemmringe und/oder durch Verklebung erfolgen.

Das Innenrohr 20 und das Außenrohr 18 sind mit einem Radialabstand voneinander beabstandet, der vorliegend ungefähr der radialen Manschettenbreite *R* im Profil-Querschnitt der Zugmanschette 30 entspricht, Das Innenrohr 20 ist in das Außenrohr 18 mit einer Überlappungslänge eingesteckt, die vorliegend ungefähr der axialen Manschettenlänge *L* entspricht. Die Manschettenlänge *L* beträgt ein Vielfaches der radialen Manschettenbreite *R*, so dass die Zugmanschette 30 bzw. der Manschettenschlauch 32 in einem Winkel von weniger als 20° zur Axialen 34 geneigt ist, wenn zwischen dem Inneren und dem Äußeren der Vakuumleitung 10 keine Druckdifferenz vorliegt. Bei Vorliegen einer Druckdifferenz beult sich der Manschettenschlauch 32 distal in Richtung Unterdruck aus, wobei der mittlere Winkel des Manschettenschlauches 32 unverändert bleibt. Der Raum für das distale Ausbeulen der Zugmanschette wird ggf. durch einen zirkulären radialen Expansions-Raum 22 des Außenrohres 18 zur Verfügung gestellt.

An der Innenseite des Außenrohres 18 ist ein nach radial innen ragender Schulterring 40 vorgesehen, der zusammen mit dem Öffnungsrand 42 des Innenrohres 20 einen Zuganschlag 44 bildet, der die Bewegung des Innenrohres 20 in das Außenrohr 18 hinein begrenzt. Zum Abfedern einer entsprechenden Anschlagbewegung des Innenrohres 20 auf das Außenrohr 18 ist an dem Innenrohr-Öffnungsrand 42 ein entsprechend flexibler und elastischer Anschlagring 46 vorgesehen.

In Fig. 2 ist eine Anordnung bestehend aus einer Vakuumpumpe 60 und einem Rezipienten 70 dargestellt. Der Rezipient 70 weist ein Elektronenmikroskop 72 auf, das an ein Dämpfergehäuse 74 vakuumdicht angeschlossen ist, das wiederum das Außenrohr 18 aufweist, das den Expansions-Raum 22 umschließt.

Die Vakuumpumpe 60 ist eine Turbomolekularpumpe mit einem Pumpen-Rotor 62 und weist an seiner Saugseite mehrere ringförmige Bauteile auf, die einerseits ein Gehäuse der Vakuumpumpe bzw. des Rotors 62 bilden, und andererseits das nicht-zylindrische Innenrohr 20 für den Schwingungsdämpfer 14 bilden.

Wie in Fig. 2 gut zu erkennen ist, erlaubt der vorliegende Schwingungsdämpfer 14 eine sehr kompakte Konstruktion, da der Schwingungsdämpfer 14 im Wesentlichen radial außen um das saugseitige Ende der Vakuumpumpe 60 herum angeordnet ist.

In der Fig. 2 ist die Situation bei einer erheblichen Druckdifferenz zwischen dem Inneren und dem Äußeren der dargestellten Anordnung 70 dargestellt. Durch den Druckunterschied wölbt sich der Manschettenschlauch 32 in Richtung Vakuum nach radial außen, wodurch sich die Vakuumpumpe 60 axial geringfügig von dem Dämpfergehäuse 74 entfernt. Durch diesen Effekt ist es möglich, dass bei fehlender oder geringer Druckdifferenz die Vakuumpumpe 60 mit ihrem elastisch deformierbaren Anschlagring 46 auf einer entsprechenden Stirnfläche 75 des Dämpfergehäuses 74 aufliegt. Beim Anlaufen der Vakuumpumpe 60 besteht also eine ungedämpfte, starre mechanische Kopplung zwischen der Vakuumpumpe 60 und dem Rezipienten 72. Erst bei entsprechendem Unterdruck entfernt sich die Vakuumpumpe 60 durch das distale Ausbeulen des Manschettenschlauches 32 axial von dem Dämpfergehäuse 74, so dass nur noch eine gut gedämpfte, unstarre vakuumdichte Verbindung zwischen der Vakuumpumpe 60 und dem Dämpfergehäuse 74 besteht.

Die Vakuumpumpe 60 ist vorliegend eine Turbomolekularpumpe, die einen schnelldrehenden Rotor 62 aufweist, der sich um die Axiale 34 dreht. Der Rotor 62 erzeugt im Wesentlichen radiale Schwingungen, die durch die im Wesentlichen axiale Orientierung des Manschettenschlauches 32 in sehr hohem Maße gedämpft wird, da sich das Außenrohr 18' und das Innenrohr 20' radial annähernd widerstandsfrei zueinander bewegen können.

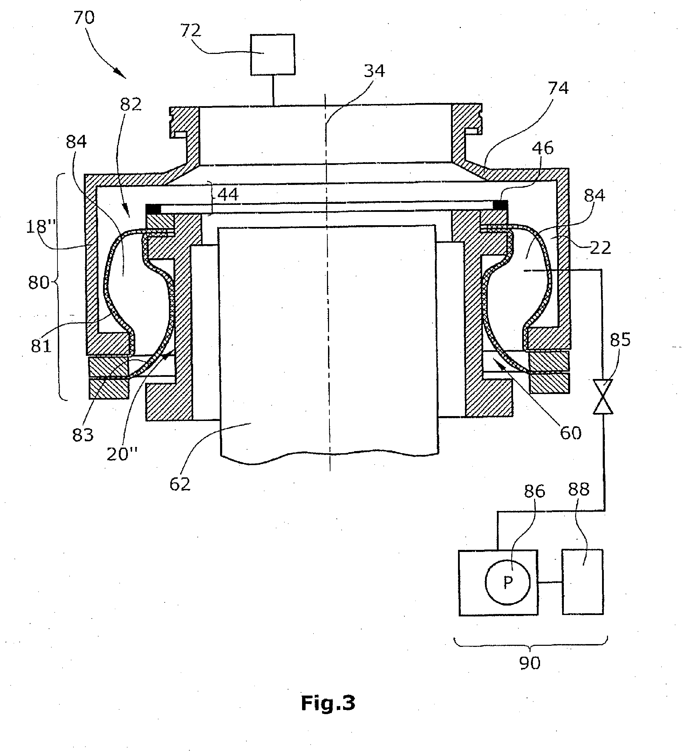

In der Fig. 3 ist eine zweite Ausführungsform eines Schwingungsdämpfers 80 dargestellt. Der Schwingungsdämpfer 80 weist eine Zugmanschette 82 auf, die von zwei zueinander konzentrischen Membranschläuchen 81,83 gebildet wird, die zwischen sich einen zirkulären Hohlraum 84 bilden. Der Hohlraum 84 wird bei Bedarf durch ein gasförmiges Fluid gefüllt. Zur Steuerung der Fluidmenge und des Fluiddruckes ist eine Manschettensteuerung 90 vorgesehen, die im Wesentlichen aus einem Steuerungsmodul 88, einer Fluidpumpe 86 und einem Fluidventil 85 gebildet wird.

Die Manschettensteuerung 90 kann durch Erhöhung oder Verringerung des Fluiddruckes bzw. der Fluidmenge in dem Zugmanschetten-Hohlraum 84 den axialen Abstand zwischen der Vakuumpumpe 60 und dem Dämpfergehäuse 74 und die Dämpfungsparameter der Zugmanschette 82 einstellen. Wenn der Zugmanschetten-Hohlraum 84 mit Fluid gefüllt ist, bildet die Zugmanschette 82 ferner ein ringförmiges Kissen, das ein radiales Anschlagen der Vakuumpumpe 60 an das Dämpfergehäuse 74 bzw. des Außenrohres 18" an das Innenrohr 20" verhindert. Als Fluid wird ein Gas verwendet, z.B. Umgebungsluft. Als Fluid kann aber auch eine Flüssigkeit verwendet werden.

## Patentansprüche

1. Vakuumleitung (10) mit zwei durch einen Schwingungsdämpfer (14) verbundenen und zueinander beweglichen Leitungsteilen (12,13),
**dadurch gekennzeichnet, daß** der Schwingungsdämpfer (14) ein vertikales Außenrohr (18), ein
vertikales Innenrohr (20), das in das Außenrohr (18) eingesteckt ist, und eine flexible Zugmanschette (30) aufweist, die zwischen den beiden Rohren (18,20) aufgespannt ist und die mit ihren Öffnungsrändern an dem Außenrohr (18) und dem Innenrohr (20) vakuumdicht befestigt ist.

2. Vakuumleitung (10) nach Anspruch 1, **dadurch gekennzeichnet, dass** die gespannte Zugmanschette (30) weniger als 45° und bevorzugt weniger als 20° zur Axialen (34) geneigt ist.

3. Vakuumleitung (10) nach Anspruch 1 oder 2, **dadurch gekennzeichnet, dass** die Manschettenlänge (L) mindestens doppelt so groß ist wie die radiale Manschettenbreite (R).

4. Vakuumleitung (10) nach einem der Ansprüche 1 bis 3, **dadurch gekennzeichnet, dass** die Zugmanschette (82) mindestens einen Hohlraum (84) aufweist, der mit einem Fluid befüllbar ist.

5. Vakuumleitung (10) nach Anspruch 4, **dadurch gekennzeichnet, dass** eine Manschettensteuerung (90) vorgesehen ist, die die Fluidmenge in dem Zugmanschetten-Hohlraum (84) betriebszustandsabhängig steuert.

6. Vakuumleitung (10) nach einem der Ansprüche 1 bis 5, **dadurch gekennzeichnet, dass** ein Zuganschlag (44) vorgesehen ist.

7. Vakuumleitung (10) nach einem der Ansprüche 1 bis 6, **dadurch gekennzeichnet, dass** ein Druckanschlag vorgesehen ist.

8. Anordnung aus einer Vakuumpumpe (60) und einem Rezipienten (72), die durch einen Schwingungsdämpfer (14) miteinander verbunden sind, der die Merkmale einer der Ansprüche 1 bis 7 aufweist.

9. Anordnung aus einer Vakuumpumpe (60) nach Anspruch 8, **dadurch gekennzeichnet, dass** die Vakuumpumpe (60) eine Turbomolekularpumpe und der Rezipient (72) ein Elektronenmikroskop ist.

## Claims

1. A vacuum line (10) comprising two line parts (12, 13) connected by a vibration damper (14) and being movable relative to each other,
**characterized in that** the vibration damper (14) comprises a vertical outer pipe (18), a vertical inner pipe (20) inserted into the outer pipe (18), and a flexible tension sleeve (30) spanned between the two pipes (18, 20) and having its opening edges vacuum-tightly fastened to the outer pipe (18) and the inner pipe (20).

2. The vacuum line (10) of claim 1, wherein the tension sleeve (30) is inclined by less than 45°, and preferably less than 20°, with respect to the axial line (34), when tensioned.

3. The vacuum line (10) of claim 1 or 2, wherein the sleeve length (L) is at least twice the radial width (R) of the sleeve.

4. The vacuum line (10) of one of claims 1 to 3, wherein the tension sleeve (82) comprises at least one cavity (84) adapted to be filled with a fluid.

5. The vacuum line (10) of claim 4, wherein a sleeve control (90) is provided controlling the amount of fluid in the tension sleeve cavity (84) depending on the operating condition.

6. The vacuum line (10) of one of claims 1 to 5, wherein a tension stop (44) is provided.

7. The vacuum line (10) of one of claims 1 to 6, wherein a compression stop is provided.

8. An arrangement comprising a vacuum pump (60) and a recipient (72) connected by a vibration damper (14) with the features of one of claims 1 to 7.

9. The arrangement of a vacuum pump (60) of claim 8, wherein the vacuum pump (60) is a turbomolecular pump and the recipient (72) is an electron microscope.

## Revendications

1. Conduite à vide (10) comprenant deux portions de conduit (12, 13) reliées par un amortisseur de vibrations (14) et mobiles l'une par rapport à l'autre,
**caractérisée en ce que**
l'amortisseur de vibrations (14) présente un tube extérieur vertical (18), un tube intérieur vertical (20) emboîté dans le tube extérieur (18), et une manchette de traction (30) flexible qui est tendue entre les deux tubes (18, 20) et est fixée, par ses bords d'ouverture, au tube extérieur (18) et au tube intérieur (20) d'une manière étanche au vide.

2. Conduite à vide (10) selon la revendication 1, **caractérisée en ce que** la manchette de traction (30) tendue est inclinée de moins de 45° et, de préférence, de moins de 20° par rapport à l'axe (34).

3. Conduite à vide (10) selon la revendication 1 ou 2, **caractérisée en ce que** la longueur (L) de la manchette est égale à au moins le double de la largeur radiale (R) de la manchette.

4. Conduite à vide (10) selon l'une des revendications 1 à 3, **caractérisée en ce que** la manchette de traction (82) présente au moins une cavité (84) pouvant être remplie d'un fluide.

5. Conduite à vide (10) selon la revendication 4, **caractérisée en ce qu'**est prévue une commande (90) de manchette, qui commande le volume de fluide dans la cavité (84) de la manchette de traction en fonction de l'état de fonctionnement.

6. Conduite à vide (10) selon l'une des revendications 1 à 5, **caractérisée en ce qu'**est prévue une butée de traction (44).

7. Conduite à vide (10) selon l'une des revendications 1 à 6, **caractérisée en ce qu'**est prévue une butée de compression.

8. Agencement constitué d'une pompe à vide (60) et d'un récipient (72) reliés entre eux par un amortisseur de vibrations (14), qui présente les caractéristiques de l'une des revendications 1 à 7.

9. Agencement constitué d'une pompe à vide (60) selon la revendication 8, **caractérisé en ce que** la pompe à vide (60) est une pompe turbomoléculaire et le récipient (72) est un microscope électronique.
